Europäisches Patentamt

European Patent Office

Office européen des brevets

(11) Publication number: **0 126 107**
**B1**

# EUROPEAN PATENT SPECIFICATION

(45) Date of publication of patent specification: **12.10.88**

(21) Application number: **83903542.5**

(22) Date of filing: **11.11.83**

(86) International application number:
**PCT/FI83/00069**

(87) International publication number:
**WO 84/01906 24.05.84 Gazette 84/13**

(51) Int. Cl.⁴: **A 62 C 3/14** // E04B1/94,
F16K17/38, F24F13/10

(54) **FUSE ARRANGEMENT FOR TRIPPING FIRE LIMITERS OR OTHER SAFETY APPLIANCES IN VENTILATION INSTALLATIONS.**

(30) Priority: **12.11.82 FI 823899**

(43) Date of publication of application:
**28.11.84 Bulletin 84/48**

(45) Publication of the grant of the patent:
**12.10.88 Bulletin 88/41**

(84) Designated Contracting States:
**AT BE CH DE FR GB LI NL SE**

(56) References cited:
**DE-A-2 261 153**
**NO-B- 148 700**
**US-A-1 924 869**
**US-A-4 221 231**

(73) Proprietor: **HALTON OY**
**SF-47400 Kausala (FI)**

(72) Inventor: **AALTO, Erkki**
**Vatajantie 8 as 6**
**SF-47400 Kausala (FI)**
Inventor: **SAUKKONEN, Harri**
**Torniomäentie 2**
**SF-45200 Kouvola 20 (FI)**
Inventor: **HÄSÄ, Juhani**
**Holstilantie**
**SF-47400 Kausala (FI)**

(74) Representative: **Tiedtke, Harro, Dipl.-Ing. et al**
**Patentanwaltsbüro Tiedtke-Bühling-Kinne-Grupe-Pellmann-Grams-Struif Bavariaring 4**
**Postfach 20 24 03**
**D-8000 München 2 (DE)**

Courier Press, Leamington Spa, England.

## Description

The present invention concerns a fuse arrangement for tripping fire limiters or other safety appliances in ventilation installations according to the pre-characterizing portion of claim 1.

It would be highly welcome in fire limiters if one fuse arrangement could be used more often than just once. It would be of importance that subsequent to false or test tripping for reasons other than fire, fuse arrangements could be immediately used for resetting. It is also important that the operability of a fire limiter could be checked in a simple and convenient manner regardling the structure other than the fuse arrangement, by tripping and resetting the closing member, e.g. the flap or louvre pack, once or several times. Convenient detachability and replaceability of the fuse arrangement are also advantages.

The currently most well known and most used fuse arrangement is a strip fuse; in this structure two metal strips are soldered together with the aid of fuse material having a desired melting point. When the temperature of the fuse material rises to a pre-determined limit value, that is to the melting temperature, the strips become detached from each other. A drawback of a structure of this kind is however that the same strip fuse cannot be reused after false or test tripping. A strip fuse is also quite likely to suffer damage or to break. There is also the problem of the long-term strength of the fuse material and the difficult control of the soldering process.

Another fuse arrangement known in the art is the so-called glass ball fuse, in which between two latches is placed a glass ball filled with a liquid with powerful thermal expansion, and which breaks when the liquid expands. The set-up of the latches relative to each other is such that when the glass ball bursts as the temperature reaches its given limit value they get free from each other. A drawback of this glass ball fuse is its single-use, expensive and inconvenient construction.

With such fuse arrangements reuse is not possible, although it is true that triggers based on thermal expansion are shown in the art, for instance a tripping mechanism wherein a stacked assembled of bimetal strips expands as it is heated and detaches a pin, connected to the structure, from a locking hole, whereby tripping can take place. A drawback of this structure is that the bimetal strips react slowly to temperature increase, and moreover the trigger arrangement is expensive; it is rather susceptible to interference, easily damaged, sensitive to corrosion, and in case of fault awkward to repair.

DE—A—2 261 153 shows a fuse arrangement for tripping fire limiters or other safety appliances in ventilation installations which comprises the features of the pre-characterizing portion of claim 1. In this known fuse arrangement, the flowing out of the molten fuse material is difficult to control, because the cross-section of the passage through which molten fuse material flows out of the interspace between the fuse body part and the sleeve-like member is very large. Additionally, a compression spring which serves to ensure disengagement of the components of the known fuse arrangement from one another when the fuse material is melting also effects that the whole quantity of molten fuse material leaves the interspace inside the fuse arrangement where it had been disposed in solid state.

If the rise of temperature lasts long enough to melt the whole quantity of the fuse material, the known fuse arrangement can only be used once, because no fuse material remains in the interspace inside the fuse arrangement. Further, the softening of the fuse material at a temperature below the melting point may also cause failure of locking in the fuse arrangement, because a harmful creep can occur in this known fuse arrangement, which phenomenon is typical of fuse material.

The subject matter of the invention is based on the problem to so develop the fuse arrangement according to the precharacterizing portion of claim 1 that, without restricting its efficiency as safety appliance, the greater part of fuse material arranged therein remains in the interspace inside the fuse arrangement even if the melting temperature is exceeded for a long time, and is available for reuse. Moreover, a creep of the fuse material shall be safely excluded below the melting temperature.

According to the invention, this problem is solved by the features in the precharacterizing portion of claim 1. The quasi-shut interspace inside the fuse arrangement, the small cross-section of the narrow flow path and the known flow characteristics of molten fuse material ensure that even in the case of a temperature level above the melting temperature a counter-pressure builds up in the interspace inside the fuse arrangement which prevents an emerging of molten fuse material from the fuse arrangement which is superfluous for the function of the fuse arrangement. On the other hand, this counter-pressure of the molten fuse is so low in comparison with the counter-pressure of the solid fuse material that the function of the fuse arrangement is not impaired. Besides, the solid fuse material is enclosed almost completely by elements of the fuse arrangement so that a creep of the solid fuse material cannot occur to an appreciable degree.

US—A—1 924 869 discloses a fuse arrangement, wherein a large empty space is provided. There is a continuous pressure of a low continuous internal force in the flow path all the time, and thus movement of the melt continues and does not cease. Furthermore, in this known fuse arrangement the dismounting of the valve opens the main duct in connection with the replacement of the fuse arrangement, with the consequence that at the valve there occurs leaking of the liquid. In this fuse arrangement the control of the clamping force is based on an estimate. In addition the quantity of the fuse material must be exact, so that no undesirable locking will occur, because the fuse material cannot flow into the free space. The melting of the fuse material starts from the wrong end. All of the fuse material, when melted, flows into the empty space if the valve is upside down.

Advantageous modifications of the inventional fuse arrangement derive from the subclaims.

The invention is described in detail referring to certain advantageous embodiments presented in the figures of the drawing attached.

Fig. 1 presents a first embodiment of the fuse arrangement according to the invention in a schematic cross-section.

Fig. 2 presents a second embodiment of the fuse arrangement in a schematic cross-section.

Fig. 3 presents a third embodiment of the fuse arrangement in a schematic cross-section.

Fig. 4 presents the fuse arrangement of Fig. 1 installed on a fire damper.

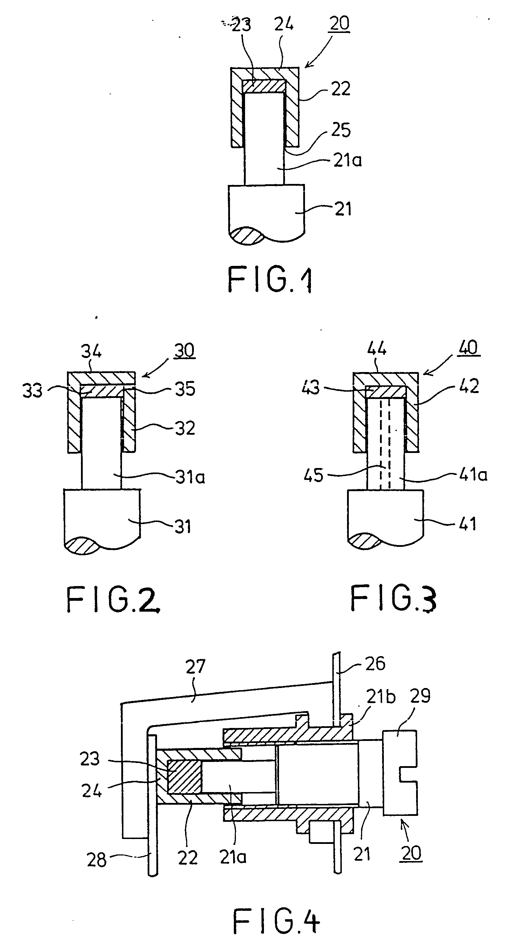

A fuse arrangement depicted in Fig. 1 is generally indicated by the reference numeral 20. The fuse arrangement 20 comprises a fuse body part 21 provided with a thinner tip portion 21a. On the end of the tip portion 21a of the fuse body part 21 is disposed a sleeve-like member 22, and between the tip portion 21a and the sleeve-like member 22 is placed fuse material 23 which keeps the sleeve-like member 22 at a certain preselected axial distance with reference to the fuse body part 21 when the fuse body part 21 and the sleeve-like member 22 tend under influence of external force to move further into each other. The sleeve-like member 22 is joined by the fuse material 23 to the tip portion of the body part.

The sleeve-like member 22 is provided with a bottom 24 and disposed around the tip portion 21a of the fuse body part 21. The viscosity of the fuse material 23 changes in the course of temperature increase drastically at the melting point i.e., it becomes liquid, and owing to the external axial force the fuse material 23 is enabled to flow into a free space or flow part 25 between the tip portion 21a and the sleeve-like member 22, whereby the sleeve-like member 22 is enabled to move in the direction of the fuse body part 21. It is to be particularly noted that at normal temperature the fluidity of the fuse material 23 is virtually nil, because of which no flowing of the fuse material 23 will take place even at extreme pressures, provided that a clearance between the tip portion 21a and the sleeve-like member 22 is appropriate in magnitude.

A fuse arrangement presented in Fig. 2 is generally indicated by the reference numeral 30. In this embodiment, too, about a tip portion 31a of fuse body part 31 is disposed a sleeve-like member 32 having a bottom 34.

Fuse material 33 is disposed between the tip portion 31a and the sleeve-like member 32. The sleeve-like member 32 is provided with a hole or passage 35, through which the controlled flow of the fuse material 33 will take place.

Also in the embodiment of Fig. 3, there is placed a sleeve-like member 42 with a bottom 44 around a tip portion 41a of a fuse body part 41 of a fuse arrangement 40, fuse material 43 is disposed between the tip portion 41a and the sleeve-like member 42. The principle of operation of the permanent fuse arrangement 40 is the same as that of the permanent fuse arrangement 30 shown in Fig. 2, with the difference that in the embodiment of Fig. 3 a passage or hole 45 is made in the tip portion 41a of the fuse body part 41. Consequently, in this embodiment the liquid fuse material 43 is arranged to flow into the passage or hole 45 in the tip portion 41a.

The operation of the fuse arrangement 20, 30, 40 is as follows. When it is connected to a fire limiter, a compressive force acts on the fuse material 23, 33, 43 via the fuse body part 21, 31, 41, and the sleeve-like member 22, 32, 42. The movement of the sleeve-like member 22, 32, 42 and of the fuse body part 21, 31, 41 with reference to each other is prevented while the fuse material 23, 33, 43 is in solid state. When the temperature rises to the melting temperature of the fuse material 23, 33, 43, the fluidity of the fuse material 23, 33, 43 begins to become considerably mobile and the sleeve-like member 22, 32, 42 will under influence of the force acting on it be displaced with reference to the fuse body part 21, 31, 41, whereby the fire limiter is tripped.

In Fig. 4 is presented a practical application of the fuse arrangement 20, wherein it has been installed on a fire damper, the shell of which has been indicated by the reference numeral 26. To the shell 26 is attached a shaped counterpiece 27 and a clamping arc 28 attached to the closing plate of the fire damper (not depicted) is clamped by the aid of the fuse arrangement 20 and the counterpiece 27 in the way that it is impacted between the bottom 24 of the sleeve-like member 22 of the fuse arrangement 20 and the counterpiece 27. The clamping may also be accomplished without counterpiece 27, in which case the sleeve-like member 22 directly clamps the clamping arc 28. The other end of the fuse body part 21, threaded over a certain length, of the fuse arrangement 20 has been shaped as a screw head 29, whereby it is simple to accomplish positive clamping of the clamping arc 28 by turning the fuse body part 21. The fuse body part 21 is encircled by a body part 21b provided with threads and attached to the shell 26.

When the temperature is low enough, the closing member can be set with the aid of the fuse arrangement 20. The action of the fuse arrangement 20 is based on changing viscosity of the fuse material 23 and/or its ability to reattach when the temperature has gone down. The fuse body part 21 and the body part 21b are so dimensioned that setting of the fire limited cannot be accomplished without fuse material 23.

The fuse arrangement can be used until the fuse material has run short in the interspace between the fuse body part and the sleeve-like member. Thereafter, new fuse material can be inserted into the fuse arrangement or the entire fuse arrangement may be replaced. By means of the fuse material quantity, the number of times one fuse arrangement can be used may be regulated.

## Claims

1. A fuse arrangement for tripping fire limiters or other safety appliances in ventilation installations, comprising a fuse body part (21, 31, 41), a sleeve-like member (22, 32, 42) and fuse material (23, 33, 43) under pressure caused by the clamping forces acting on the fuse arrangement the fuse material being disposed between said fuse body part (21, 31, 41) and said sleeve-like member (22, 32, 42), kepping said part and said member in a certain position relative to each other when the fuse material is in its solid state, and allowing them to move with reference to each other when the fuse material is in its molten state by flowing out of the interspace occupied by said fuse material (23, 33, 43) in its solid state, said fuse body part (21, 31, 41) and said sleeve-like member (22, 32, 42) defining said interspace serving to accommodate said fuse material (23, 33, 43) inside said fuse arrangement, out of which interspace said molten fuse material (23, 33, 43) flow through a flow path (25, 35, 45) and within which molten fuse material (23, 33, 43), which remains in said interspace solidifies again, when the temperature falls below the solidification limit, characterized in that said flow path (25, 35, 45), through which said molten fuse material (23, 33, 43) flows out of said interspace, is so narrow that the flow of molten fuse material (23, 33, 43) ceases as soon as the clamping forces acting on said fuse arrangement have fallen below a certain limit.

2. A fuse arrangement according to claim 1, wherein said sleeve-like member (22, 32, 42) is disposed around a tip portion (21a, 31a, 41a) of said fuse body part (21, 31, 41).

3. A fuse arrangement according to claim 1 or 2, wherein said sleeve-like member (22, 32, 42) is provided with a bottom (24, 34, 44), and wherein said flow path (25, 35, 45) for the flow of said fuse material (23, 33, 43) is arranged by a passage or hole (25, 35, 45) in said sleeve-like member (22, 32) or in said fuse body part (41).

4. A fuse arrangement according to anyone of claims 1 to 3, wherein said fuse body part (21, 31, 41) is provided with threads and screwable into a body part (21b) with threads, attached to a shell (26) of a fire damper.

5. A fuse arrangement according to claim 4, wherein said fuse arrangement (20, 30, 40) is disposed to clamp a clamping arc (28) affixed to a closing plate of said fire damper between a counterpiece (27) attached to said shell (26) of said fire damper and said sleeve-like member (22, 32, 42) of said fuse arrangement (20, 30, 40), or wherein said sleeve-like member (22, 32, 42) is disposed to directly clamp said clamping arc (28) without counterpiece (27).

6. A fuse arrangement according to claim 4 or 5, wherein said fuse body part (21) and said body part (21b) are so disposed with reference to each other that said fuse arrangement (20) cannot be used for resetting said fire limiter or other safety appliance after said fuse material (23) has been depleted.

## Patentansprüche

1. Schmelzsicherungsanordnung zur Auslösung von Brandsicherungen oder anderen Sicherheitsvorrichtungen in Belüftungsanlagen, mit einem Schmelzsicherungskörperteil (21, 31, 41), einem Hülsenteil (22, 32, 42) und Schmelzmaterial (23, 33, 43), welches unter einem Druck steht, der durch auf die Schmelzsicherungsanordnung wirkende Klemmkräfte erzeugt wird, wobei das Schmelzmaterial zwischen dem Schmelzsicherungskörperteil (21, 31, 41) und dem Hülsenteil (22, 32, 42) angeordnet ist, das Schmelzsicherungskörperteil und das Hülsenteil in einer festen Lage zueinander hält, wenn das Schmelzmaterial in seinem festen Zustand ist, und beiden eine Bewegung relativ zueinander erlaubt, wenn das Schmelzmaterial in seinem geschmolsenen Zustand ist, indem es aus dem Zwischenraum ausfließt, den das Schmelzmaterial (23, 33, 43) in seinem festen Zustand einnimmt, wobei das Schmelzsicherungskörperteil (21, 32, 41) und das Hülsenteil (22, 32, 42) den zur Aufnahme des Schmelzmaterials (23, 33, 43) dienenden Zwischenraum im Inneren der Schmelzsicherungsanordnung ausbilden, wobei aus diesem Zwischenraum das geschmolzene Schmelzmaterial (23, 33, 43) durch einen Abfluß (25, 35, 45) ausfließt und in dem Zwischenraum geschmolzenes bleibt, sich wiederverfestigt, wenn die Temperatur unter die Festigungsgrenze fällt, dadurch gekennzeichnet, daß der Abfluß (25, 35, 45), durch den das geschmolzene Schmelzmaterial (23, 33, 43) aus dem Zwischenraum ausfließt, so eng ist, daß die Strömung des geschmolzenen Schmelzmaterials (23, 33, 43) endet, sobald die Klemmkräfte, die auf die Schmelzsicherungsanordnung einwirken, unter eine bestimmte Grenze abfallen.

2. Schmelzsichersanordnung nach Anspruch 1, bei der das Hülsenteil (22, 32, 42) um einen Endabschnitt (21a, 31a, 41a) des Schmelzsicherungskörperteils (21, 31, 41) angeordnet ist.

3. Schmelzsicherungsanordnung nach Anspruch 1 oder 2, bei der das Hülsenteil (22, 32, 42) mit einem Boden (24, 43, 44) versehen ist und bei dem der Abfluß (25, 35, 45) für die Strömung des Schmelzmaterials (23, 33, 43) durch einen Durchlaß oder ein Loch (25, 35, 45) in dem Hülsenteil (22, 32, 42) oder in dem Schmelzsicherungskörperteil (41) gebildet ist.

4. Schmelzsicherungsanordnung nach einem der Ansprüche 1 bis 3, bei dem das Schmelzsicherungskörperteil (21, 31, 41) mit einem Gewinde versehen und in einen mit einem Gewinde versehenen Teilkörper (21b) schraubbar ist, der an einem Gehäuse (26) einer Brandsicherung befestigt ist.

5. Schmelzsicherungsanordnung nach Anspruch 4, bei der die Schmelzsicherungsanordnung (20, 30, 40) derart angeordnet ist, daß sie einen Klemmbogen (28), der an einer Verschlußplatte der Brandsicherung befestigt ist, zwischen einem Gegenstück (27), das an dem Gehäuse (26) der Brandsicherung befestigt ist, und dem Hülsenteil (22, 32, 42) der Schmelzsicherungsanordnung (22, 32, 42) so angeordnet ist, daß es den Klemmbogen (28) ohne Gegenstück (27) ein-klemmt.

6. Schmelzsicherungsanordnung nach An-spruch 4 oder 5, bei der das Schmelzsicherungskörperteil (21) und der Teilkörper (21b) in Bezug aufeinander so angeordnet sind, daß die Schmelzsicherungsanordnung (20) nicht mehr zur Rückstellung der Brandsicherung oder anderer Sicherheitseinrichtungen benutzt werden kann, nachdem das Schmelzmaterial (23) entleert ist.

**Revendications**

1. Coupe-circuit pour déclencher des limiteurs de feu ou d'autres dispositifs de sécurité dans des installations de ventilation comprenant un corps de fusible (21, 31, 41), un organe en forme de rainure (22, 32, 42) et un matériau fusible (23, 33, 43) sous une pression engendrée par les forces de serrage agissant sur le coupe-circuit, le matériau fusible étant disposé entre ledit corps de fusible (21, 31, 41) et ledit organe en forme de rainure (22, 32, 42), maintenant ledit corps et ledit organe dans une position déterminée l'un par rapport à l'autre lorsque le matériau fusible se trouve à l'état solide, et leur permettant de se déplacer l'un par rapport à l'autre quand le matériau fusible est dans son état de fusion et s'écoule alors en dehors de l'espace occupé par le matériau fusible (23, 33, 43) à l'état solide, ledit corps de fusible (21, 31, 41) et ledit organe en forme de rainure (22, 32, 42) définissant ledit espace recevant ledit matériau fusible (22, 33, 43) à l'intérieur dudit coupe-circuit, en dehors duquel espace ledit matériau fusible dans son état fondu (23, 33, 43) s'échappe selon un chemin d'écoulement (25, 35, 45) et dans lequel ledit matériau fusible à l'état fondu (23, 33, 43) qui reste dans ledit espace se solidifié à nouveau quand la température tombe au-dessous du point de solidification, caractérisé en ce que ledit chemin d'écoulement (25, 35, 45), que suit ledit matériau fusible à l'état fondu (23, 33, 43) en s'échappant dudit espace, est suffisamment étroit pour que l'écoulement de matériau fusible à l'état fondu (23, 33, 43) cesse aussitôt que les forces de serrage agissant sur ledit coupe-circuit sont tombées au-dessous d'une limite déterminée.

2. Coupe-circuit selon la revendication 1, caractérisé en ce que ledit organe en forme de rainure (22, 32, 42) est disposé autour d'une partie d'extrémité (21a, 31a, 41a) dudit corps de fusible (21, 31, 41).

3. Coupe-circuit selon la revendication 1 ou 2, caractérisé en ce que ledit organe en forme de rainure (22, 32, 42) est pourvu d'un fond (24, 34, 44), et en ce que ledit chemin d'écoulement (25, 35, 45) prévu pour l'écoulement dudit matériau fusible (23, 33, 43) est défini par un passage ou ouverture (25, 35, 45) dans ledit organe en forme de rainure (22, 32) ou dans ledit corps de fusible (41).

4. Coupe-circuit selon l'une quelconque des revendications 1 à 3, caractérisé en ce que ledit corps de fusible (21, 32, 41) est pourvu d'un filetage et peut être vissé dans un support (21b) pourvu d'un taraudage, fixé à une plaque (26) d'un étouffoir de feu.

5. Coupe-circuit selon la revendication 4, caractérisé en ce que ledit coupe-circuit (20, 30, 40) est disposé de sorte à coincer une cale (28) fixée à une plaque de fermeture dudit étouffoir de feu, entre en étrier (27) fixé sur ladite plaque (26) dudit étouffoir et ledit organe en forme de rainure (22, 32, 42) dudit coupe-circuit (20, 30, 40), ou en ce que ledit organe en forme de rainure (22, 32, 42) est agencé de sorte à coincer directement ladite cale (28) sans étrier (27).

6. Coupe-circuit selon la revendication 4 ou 5, caractérisé en ce que le corps de fusible (21) et ledit support (21b) sont disposés l'un par rapport à l'autre de sorte que le coupe-circuit (20) ne puisse être utilisé pour jéarmer ledit étouffoir de feu ou autres dispositifs de sécurité après consommation dudit matériau fusible (23).

FIG.1

FIG.2

FIG.3

FIG.4